# FASCICULE DE BREVET EUROPEEN

(11) **EP 3 980 851 B1**
(45) Date de publication et mention de la délivrance du brevet: **28.06.2023**
(21) Numéro de dépôt: 20731930.2
(22) Date de dépôt: 05.05.2020
(51) Int. Cl.: G05B 13/04

(54) **PROCEDE DE DETERMINATION D'UN MODELE PREDICTIF D'UN RAPPORT DE PRESSIONS POUR UNE TURBOMACHINE DOUBLE FLUX**
VERFAHREN ZUR BESTIMMUNG EINES PRÄDIKTIVEN MODELLS EINES DRUCKVERHÄLTNISSES FÜR EIN DOPPELSTROMTURBINENTRIEBWERK
METHOD FOR DETERMINING A PREDICTIVE MODEL OF A PRESSURE RATIO FOR A DUAL-FLOW TURBINE ENGINE

(30) Priorité: 10.06.2019 FR 1906149
(43) Date de publication de la demande: 13.04.2022
(73) Titulaire: SAFRAN AIRCRAFT ENGINES, 75015 Paris (FR)
(72) Inventeur: COSTE, Raphaël, Jean-Louis, 77550 MOISSY-CRAMAYEL (FR); MEQQADMI, Mohammed, 77550 MOISSY-CRAMAYEL (FR); ALIMARDANI, Armand, Dariouche, 77550 MOISSY-CRAMAYEL (FR); MAIRE, Alexis, Louis-Marie, 77550 MOISSY-CRAMAYEL (FR)
(74) Mandataire: Cabinet Beau de Loménie
(86) Numéro de dépôt international: PCT/FR2020/050746
(87) Numéro de publication internationale: WO 2020/249878

(56) Documents cités:
- EP-A2- 1 298 512
- EP-A2- 2 570 616
- DE-A1-102015 119 363

## Description

### Technique antérieure

La présente invention appartient au domaine général des turbomachines, c'est-à-dire des moteurs à turbine à gaz, plus particulièrement les turbomachines double flux destinées à la propulsion des aéronefs. Elle concerne un procédé de détermination d'un modèle prédictif d'un rapport de pressions pour une turbomachine double flux. L'invention concerne également un procédé de détermination d'une table de rapports de pression pour la commande d'une vanne de contrôle de jeux d'aubes d'une turbine basse pression équipant une turbomachine double flux.

Les turboréacteurs double flux sont apparus dans les années 1960, et se sont depuis très largement développés, en particulier pour les domaines de vitesse subsonique. Ils présentent en effet l'avantage de réduire la consommation de carburant nécessaire à leur fonctionnement. Ils sont en outre moins bruyants. EP2570616 A2 divulgue un procédé de détermination d'un modèle prédictif d'un rapport de pressions.

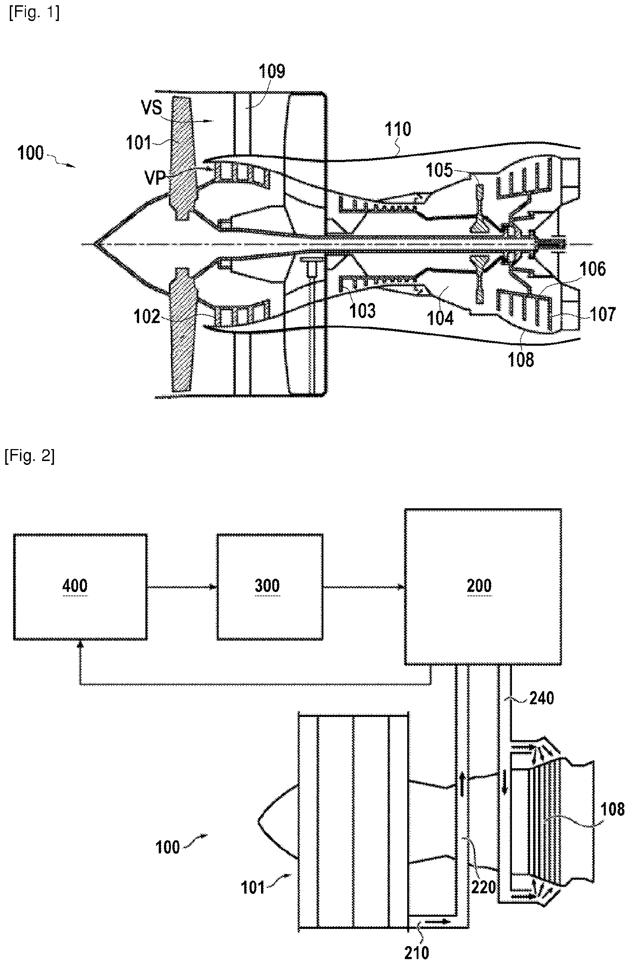

La figure 1 représente schématiquement un exemple de réalisation d'une turbomachine double flux 100 destinée à équiper un aéronef, telle que connue dans l'état de la technique. La figure 1 correspond plus particulièrement à une vue en coupe longitudinale de la turbomachine 100.

Par « longitudinale », on fait référence ici à une direction suivant un axe d'écoulement de flux d'air au sein de ladite turbomachine 100. Pour la suite de la description, le terme « radiale » fait quant à lui référence à une direction normale à l'axe longitudinal d'écoulement des flux d'air.

Conventionnellement, et tel qu'illustré sur la figure 1, la turbomachine double flux 100 comporte une soufflante carénée 101, encore appelée fan, celle-ci étant généralement placée à l'amont du moteur suivant le sens d'écoulement de flux d'air au sein dudit moteur. La masse d'air aspirée au moyen de ladite soufflante 101 est divisée en un flux primaire FP et un flux secondaire FS, les deux flux étant concentriques. Le flux primaire FP sort de la soufflante pour être injecté dans une veine primaire VP où il est typiquement compressé par un premier compresseur 102, dit basse pression ou booster, puis dans un second compresseur 103, dit haute pression, avant d'entrer dans une chambre de combustion 104, pour finalement alimenter successivement une turbine haute pression 105 et une turbine basse pression 106. Le flux secondaire FS est quant à lui comprimé par l'étage de soufflante carénée 101 après passage au travers de redresseurs de type OGV 109 (acronyme de l'expression anglo-saxonne « Outlet Guide Vane »), puis éjecté directement, sans avoir été chauffé, vers l'atmosphère pour fournir la majeure partie de la poussée de la turbomachine 100.

La séparation en deux flux FP, FS de la masse d'air aspirée s'opère en aval de la soufflante, au niveau d'un compartiment inter-veines 110 (encore appelé « compartiment de coeur », ou « core compartment » dans la littérature anglo-saxonne) qui enveloppe le flux primaire FP et qui guide, par sa partie externe (c'est-à-dire sa partie qui n'est pas en contact avec le flux primaire FP), le flux secondaire FS dans une veine secondaire VS.

Par ailleurs, et comme représenté sur la figure 1, la turbine basse pression 106 comporte une pluralité d'aubes 107 s'étendant radialement, et est logée à l'intérieur d'un carter 108. De manière connue, le contrôle des jeux d'aubes de la turbine basse pression 106, c'est-à-dire le contrôle de la distance entre les sommets respectifs de ces aubes 107 avec le carter 108, est un point d'intérêt majeur dans la perspective d'une amélioration de la consommation spécifique, c'est-à-dire la quantité de carburant nécessaire pour produire une poussée de un Newton pendant une heure. Il est notamment crucial de pouvoir contrôler finement ces jeux d'aubes lors de phases de vol correspondant à des régimes moteur et à un nombre de Mach élevés (phase de montée et phases de croisière dite « cruise » dans la littérature anglo-saxonne). En effet, lors de telles phases, la turbomachine 100 est exposée à des contraintes mécanique et thermique importantes, provoquant l'expansion de certains composants apte à modifier les jeux d'aubes, ce qui peut entrainer une dégradation de la consommation spécifique.

Afin de contrôler les jeux d'aube entre la turbine basse pression 106 et le carter 108 l'entourant, il est connu de faire usage d'une vanne de contrôle de type LPTACC (acronyme de l'expression anglosaxonne « Low Pressure Turbine Active Clearance Control »), comme cela est par exemple détaillé dans le document FR 3 059 042.

La figure 2 représente schématiquement l'architecture de l'environnement d'une vanne de contrôle 200 de type LTPACC et de sa commande active. Cette vanne de contrôle 200 permet de contrôler de façon continue un débit d'air issu de la veine secondaire VS, à partir d'un prélèvement 210, et de le diriger vers le carter 108 disposé en regard des aubes 107 de la turbine basse pression 106. Un tel prélèvement est par exemple réalisé en aval des redresseurs OGV 109 au moyen d'une ouverture formant une porte, à la façon d'une écope. Le prélèvement 210 communique avec un conduit d'amenée 220 qui amène le flux d'air à la vanne de contrôle 200. Un conduit de rejet 240 amène ensuite cet air depuis la vanne de contrôle 200 vers le carter 108.

Tel qu'illustré également par la figure 2, une unité de calcul 400, encore connue sous le nom de FADEC (acronyme de l'expression anglo-saxonne « Full Authority Digital Engine Control ») reçoit notamment en entrée une valeur du régime moteur ainsi qu'un nombre de Mach associé à l'aéronef en fonctionnement (et donc in fine à la turbomachine 100 en fonctionnement). Sur la base de ces données d'entrée, l'unité de calcul 400 détermine une commande en débit de la vanne de contrôle 200. Cette commande en débit est classiquement convertie en une commande en position envoyée vers un actionneur 300 qui pilote la vanne de 200, via le prélèvement 210 dans la veine secondaire VS. Une liaison de retour entre la vanne de contrôle 200 et l'unité de calcul 400 est prévue.

L'un des objectifs du contrôle est donc de définir un débit optimal d'air de la vanne permettant de limiter au maximum le jeu en sommet des aubes 107, de sorte à optimiser le rendement énergétique de la turbine basse pression 106, notamment autour des phases de montée et de croisière (par exemple autour du point cruise 7 à une altitude sensiblement égale à 13716 mètres, soit sensiblement égale à 45 kft, « kft » faisant référence ici à une altitude mesurée en pieds). Il faut également noter que la commande de la vanne de contrôle 200 permet d'assurer la tenue thermique du carter 108. Il importe en effet de garantir le maintien de la température de ce dernier dans une plage préconisée, par exemple une température inférieure à 690°C lorsquela vanne de contrôle fonctionne correctement, ou bien inférieure à 750°Cen cas de panne de celle-ci.

Comme mentionné ci-avant, la commande de la vanne de contrôle 200 est effectuée en vol par l'unité de calcul 400 sur la base d'une valeur du régime moteur ainsi que d'un nombre de Mach de la turbomachine 100.

Plus précisément, cette valeur du régime moteur, désormais désignée par le sigle « PCN12R » dans la suite de la description, correspond à un régime dit « basse pression », c'est-à-dire un régime de vitesse de rotation de la turbine basse pression 106. Plus précisément, la valeur PCN12R résulte essentiellement de l'expression de la vitesse de rotation de la turbine basse pression 106 (ou de manière équivalente de la vitesse de rotation de la soufflante 101) en pourcentage d'un régime nominal prédéterminé. Ledit régime nominal est fixé, de manière connue en soi, en phase d'avant-projet du développement du turboréacteur. On comprend donc que la valeur PCN12R correspond à une quantité adimensionnée, obtenue par comparaison avec ledit régime nominal. Il convient de noter que cette quantité peut éventuellement être modulée par un coefficient tenant compte d'une température ambiante.

Ainsi, sur la base de valeurs PCN12R et de nombre de Mach obtenus en cours de vol, l'unité de calcul 400 détermine de manière essentielle une pression P1, via un calcul intermédiaire d'un rapport de pressions P1/P2. La pression P1 correspond à une pression d'air au sein du compartiment inter-veines 110, cette pression P1 étant nécessaire à la commande de la vanne de contrôle 200. La pression P2, quant à elle, correspond à une pression d'air dans la veine secondaire VS, par exemple entre les redresseurs OGV 109 et un plan radial situé au niveau de la partie amont du compresseur haute pression 103.

Pour déterminer le rapport P1/P2 sur la base de valeurs PCN12R et de nombre de Mach obtenus en cours de vol, au moins une table est conventionnellement implémentée dans l'unité de calcul 400. Une telle table correspond à une grille bidimensionnelle comportant des noeuds respectivement associés à un nombre de Mach M de la turbomachine 100, ainsi qu'à une valeur PCN12R. A chaque noeud de la grille est associée une valeur du rapport P1/P2 obtenue par application d'un modèle prédictif. Il s'agit là d'un modèle prédictif du rapport P1/P2 en fonction du nombre de Mach et du régime PCN12R considérés comme variables explicatives, et déterminé à partir de données P1, P2, M et PCN12R acquises lors d'une ou plusieurs campagnes d'essai. Dit encore autrement, ce modèle prédictif peut être représenter par une fonction F de sorte que P1/P2 = F(M, PCN12R).

La table ainsi remplie est implémentée dans l'unité de contrôle 400. En raison de contraintes de développement logiciel, mais également de capacité de mémorisation de l'unité de calcul 400, cette table est de taille prédéterminée. Par exemple, elle comporte en entrée six valeurs Mach (par exemple 0, 0,3, 0,6, 0,75, 0,8, 1) ainsi que dix valeurs PCN12R (par exemple de 20% à 100% par pas de 10%, ainsi que 105%), de sorte à comporter soixante valeurs de rapports P1/P2.

Une fois la table implémentée dans l'unité de contrôle 400, les rapports P1/P2 contenus dans la table sont interpolés par l'unité 400 pour estimer des valeurs P1/P2 non contenues dans la table (en raison de sa taille limitée). La table sert donc de support à l'unité de calcul 400 pour estimer le rapport P1/P2 en tout point de fonctionnement de la turbomachine 100. De plus, une fois un rapport P1/P2 déterminé par l'unité de calcul 400 par interpolation, celle-ci peut remonter facilement à la valeur de P1, essentielle pour la commande de la vanne de contrôle 200, la pression P2 étant en effet un paramètre donc la prédiction est maîtrisée.

Bien que cette manière de procéder permette d'estimer des valeurs de pression P1 pour commander la vanne de contrôle, elle n'en reste pas moins fortement déficiente à ce jour.

En effet, le modèle prédictif utilisé pour construire une table de rapports P1/P2 se révèle fortement imprécis. Cette imprécision résulte fondamentalement de la façon dont ce modèle prédictif est construit, à savoir que lesdites données acquises lors de campagnes d'essai sont initialement classées par tranches de valeurs de Mach M. Plusieurs interpolations (polynomiale, linéaire) sont ensuite exécutées pour chacune de ses tranches, de sorte à obtenir un modèle prédictif par tranche de Mach. Parmi ces modèles, il a été constaté que certains d'entre eux sont problématiques dans la mesure où ils génèrent une pluralité de rapports P1/P2 pour un même couple de valeurs M et PCN12R. Autrement dit, pour remplir un noeud d'une table correspondant à un couple donné de valeurs M et PCN12R, il peut être nécessaire d'effectuer un choix entre plusieurs rapports P1/P2 générés pour ce noeud. Ce choix est source d'imprécision, des valeurs P1/P2 étant exclues alors mêmes qu'elles pourraient se révéler plus pertinentes.

L'imprécision générée par un tel modèle prédictif se propage à la table destinée à être implémentée dans l'unité de calcul 400. On comprend en outre que cette imprécision se propage ensuite aux valeurs déterminées par l'unité de calcul 400 par interpolation dans la table, puis finalement à la commande de la vanne de contrôle 200. Il en résulte un débit d'air de la vanne potentiellement mal adapté au contrôle des jeux d'aubes.

### Exposé de l'invention

La présente invention a pour objectif de remédier à tout ou partie des inconvénients de l'art antérieur, notamment ceux exposés ci-avant, en proposant une solution qui permette d'obtenir un modèle prédictif d'un rapport de pressions P1/P2 pour une turbomachine double flux qui soit plus précis que les solutions de l'art antérieur, de sorte à pouvoir limiter de manière très efficace l'imprécision des valeurs contenues dans une table déterminée au moyen d'un tel modèle prédictif.

A cet effet, et selon un premier aspect, l'invention concerne un procédé de détermination d'un modèle prédictif d'un rapport de pressions P1/P2 pour une turbomachine double flux de type prédéfini comportant une veine primaire et une veine secondaire séparées par un compartiment inter-veines, la pression P1 correspondant à une pression d'air au sein dudit compartiment inter-veines, la pression P2 correspondant à une pression d'air dans la veine secondaire. En outre, ledit procédé est mis en oeuvre par un système de traitement comportant des moyens d'acquisition ainsi qu'un dispositif de traitement, et comprend :
- une étape d'acquisition, par lesdits moyens d'acquisition et sur une turbomachine d'essai en fonctionnement correspondant au type prédéfini, en des instants de mesure respectifs, d'ensembles de mesures comportant chacun une mesure P1, une mesure P2, une mesure M d'un nombre de Mach de la turbomachine d'essai, et une mesure PCN12R représentative d'un régime basse pression de la turbomachine d'essai,
- une étape d'obtention desdits ensembles de mesures par le dispositif de traitement,
- une étape d'apprentissage supervisé, par le dispositif de traitement et à partir desdits ensembles de mesures obtenus, d'un modèle prédictif du rapport P1/P2 en fonction du nombre M et du régime PCN12R considérés comme variables explicatives.

Le fait de mettre en oeuvre un apprentissage supervisé pour déterminer le modèle prédictif du rapport P1/P2 permet avantageusement d'éviter tout découpage des ensembles de mesures acquis par tranche de Mach M, comme cela est pratiqué dans l'état de la technique. Autrement dit, en procédant par apprentissage supervisé, le préjugé selon lequel la prédiction du rapport de pression P1/P2 doit s'effectuer grâce à des modèles prédictifs respectivement associés à des tranches de Mach M est surmonté.

Par ailleurs, les inventeurs ont pu constater que la mise en oeuvre d'un apprentissage supervisé avait pour effet remarquable d'améliorer grandement la précision du modèle prédictif obtenu. Cette précision accrue résulte de manière fondamentale du fait qu'il n'est plus nécessaire de procéder à des choix arbitraires de rapports P1/P2 pour un même couple de valeurs explicatives (M, PCN12R), comme détaillé ci-avant en référence à l'état de la technique.

Dans des modes particuliers de mise en oeuvre, le procédé de détermination d'un modèle prédictif peut comporter en outre l'une ou plusieurs des caractéristiques suivantes, prises isolément ou selon toutes les combinaisons techniquement possibles.

Dans des modes particuliers de mise en oeuvre, l'étape d'apprentissage supervisé comporte la mise en oeuvre d'un algorithme de machine à vecteurs de support.

Un tel algorithme pour l'apprentissage supervisé permet d'obtenir d'excellents résultats de précision pour le modèle de prédiction, ainsi que l'ont constaté les inventeurs. Avantageusement, un tel algorithme offre également la possibilité de prendre en considération d'autres variables explicatives que les seuls nombre M et régime PCN12R. Bien que cela ne soit pas encore exploité en raison de la taille limitée des tables implémentées dans des unités de calcul (FADEC) d'aéronefs, on comprend néanmoins qu'une évolution future de cette contrainte permettra d'améliorer encore la précision du modèle prédictif grâce à l'invention.

Dans des modes particuliers de mise en oeuvre, l'algorithme de machine à vecteurs de support utilise un noyau gaussien.

L'utilisation d'un tel noyau gaussien permet notamment de limiter le coût de calcul de l'étape d'apprentissage supervisé, et s'appuie à cet effet sur une technique dite d' « astuce du noyau » (« kernel trick » dans la littérature anglo-saxonne), et connue de l'homme de l'art.

Dans des modes particuliers de mise en oeuvre, ledit procédé comporte, entre l'étape d'obtention et l'étape d'apprentissage supervisé, une étape de filtrage des ensembles de mesures obtenus, de sorte à supprimer des ensembles comportant chacun au moins une mesure située en dehors d'un intervalle prédéfini associé à ladite mesure.

Le fait d'effectuer un tel filtrage permet avantageusement d'écarter des ensembles de mesures contenant des mesures aberrantes. Ainsi, les ensembles utilisés lors de l'étape d'apprentissage supervisé sont filtrés, et la précision du modèle prédictif obtenu est encore accrue.

Dans des modes particuliers de mise en oeuvre, ledit procédé comporte une étape de validation du modèle prédictif appris, de sorte que si ledit modèle n'est pas validé, au moins l'étape d'apprentissage supervisé est réitérée.

Une telle validation permet d'accroitre la robustesse du procédé de détermination du modèle prédictif. Il s'agit donc de vérifier que ce modèle prédictif dispose d'un comportement conforme à un comportement attendu pour prévoir le rapport P1/P2 en fonction des variables M et PCN12R.

Dans des modes particuliers de mise en oeuvre, l'étape de validation comporte une validation croisée de type « k-fold ».

Selon un deuxième aspect, l'invention concerne un procédé de détermination d'au moins une table de rapports de pressions P1/P2 destinée à la commande d'une vanne de contrôle de jeux d'aubes d'une turbine basse pression équipant une turbomachine double flux, ladite turbomachine comportant une veine primaire et une veine secondaire séparées par un compartiment inter-veines, la pression P1 correspondant à une pression d'air au sein dudit compartiment inter-veines, la pression P2 correspondant à une pression d'air dans la veine secondaire. En outre, ledit procédé comporte :
- une étape d'obtention d'un modèle prédictif d'un rapport de pressions P1/P2 préalablement déterminé pour ladite turbomachine selon l'invention,
- une étape de génération d'au moins une grille bidimensionnelle vide de taille prédéterminée dont une dimension correspond à des valeurs de nombre de Mach M de la turbomachine, et dont l'autre dimension correspond à des valeurs PCN12R représentatives d'un régime basse pression de la turbomachine,
- une étape de remplissage de la grille, chaque noeud de la grille étant associé à un rapport de pressions P1/P2 déterminé par application dudit modèle prédictif aux valeurs M et PCN12R associées audit noeud, la grille ainsi remplie formant une table de rapports de pression P1/P2.

Le fait d'utiliser ici le modèle prédictif déterminé selon l'invention est particulièrement avantageux dans la mesure où la table bénéficie directement de la précision de calcul de ce dernier. Autrement dit, la table déterminée ici comporte des rapports P1/P2 beaucoup plus précis que ceux obtenus avec les modèles par tranche de l'état de la technique, et cela quelle que soit les valeurs M et PCN12R fournies en entrée de la grille.

Par ailleurs, ladite table est destinée à être utilisée par une unité de calcul d'un aéronef pour déterminer, par interpolation bilinéaire, des rapports de pression P1/P2 non initialement contenus dans la table. Par conséquent, on comprend bien que le gain de précision de la table déterminée selon l'invention se propage aux valeurs déterminées par l'unité de calcul.

Dans des modes particuliers de mise en oeuvre, le procédé de détermination d'au moins une table peut comporter en outre l'une ou plusieurs des caractéristiques suivantes, prises isolément ou selon toutes les combinaisons techniquement possibles.

Dans des modes particuliers de mise en oeuvre, une pluralité de grilles bidimensionnelles vides de tailles respectives identiques est générée de manière aléatoire au cours de l'étape de génération d'au moins une grille, de sorte à obtenir une pluralité de tables de rapports de pression P1/P2, dites « tables modèles », correspondant respectivement auxdites grilles remplies au cours de l'étape de remplissage, ledit procédé comportant en outre :
- une étape de génération de couples, dits « couples de test », chaque couple de test étant formé d'une valeur de nombre de Mach M ainsi que d'une valeur PCN12R,
- une étape de détermination, pour chaque table modèle et pour chaque couple de test, d'un rapport de pression P1/P2, dit « rapport de test », par interpolation bilinéaire entre des rapports de pression P1/P2 contenus dans ladite table modèle,
- une étape de détermination de rapports de pression P1/P2, dit « rapports prédits », par application dudit modèle prédictif à chaque couple de test,
- une étape d'estimation, pour chaque table modèle, d'au moins une erreur d'interpolation fonction de différences entre les rapports prédits associés à ladite table modèle et les rapports de test, chaque différence étant évaluée pour un rapport prédit et un rapport de test associés à un même couple de test,
- une étape de détermination éventuelle, parmi les tables modèles, d'au moins une table, dite « table optimale », l'erreur d'interpolation d'une table optimale étant inférieure, en valeur absolue, à une valeur seuil prédéfinie.

Une telle mise en oeuvre pour la détermination éventuelle d'au moins une table optimale est donc particulièrement avantageuse en ce qu'elle offre la possibilité d'obtenir des tables optimales pouvant présenter qui diffèrent entre eux (cela en raison des grilles générées aléatoirement). Il en découle la possibilité d'obtenir des tables optimales présentant des maillages fins pour des phases de vol au cours desquels il est crucial d'évaluer avec précision la pressions P1 (nombre de mach M élevé et / ou régime PCN12R élevé), cela afin que l'unité de calcul 400 commande avec précision la vanne de contrôle.

Dans des modes particuliers de mise en oeuvre, deux erreurs d'interpolation sont estimées pour chaque table modèle :
- une première erreur d'interpolation correspondant au maximum, en valeur absolue, des différences entre les rapports prédits et les rapports de test, pour les rapports de test dont les couples de test associés ont une valeur PCN12R comprise entre 91% et 95% ainsi qu'à une valeur de nombre de Mach M comprise entre 0,79 et 0,89, la valeur seuil associée à ladite première erreur d'interpolation étant égale à 0,5 % ;
- une deuxième erreur d'interpolation correspondant au maximum, en valeur absolue, des différences entre les rapports prédits et les rapports de test, pour les rapports de test dont les couples de test associés ont une valeur PCN12R inférieure à 91% ainsi qu'une valeur de nombre de Mach M inférieure à 0,79, la valeur seuil associée à ladite deuxième erreur d'interpolation étant égale à 1,5 %.

Dans des modes particuliers de mise en oeuvre, le nombre de couples de test générés est dix fois supérieur au nombre de grilles bidimensionnelles générées aléatoirement.

Selon un troisième aspect, l'invention concerne un programme d'ordinateur comportant un ensemble d'instructions de code de programme qui, lorsqu'elles sont exécutées par un processeur, configurent ledit processeur pour mettre en oeuvre :
- des étapes d'obtention et d'apprentissage supervisé d'un procédé de détermination d'un modèle prédictif selon l'invention, et / ou
- un procédé de détermination d'au moins une table selon l'invention.

Selon un quatrième aspect, l'invention concerne un support d'enregistrement lisible par un ordinateur sur lequel est enregistré un programme d'ordinateur selon l'invention.

Selon un cinquième aspect, l'invention concerne un dispositif de traitement pour la détermination d'un modèle prédictif d'un rapport de pressions P1/P2 pour une turbomachine double flux de type prédéfini comportant une veine primaire et une veine secondaire séparées par un compartiment inter-veines, la pression P1 correspondant à une pression d'air au sein dudit compartiment inter-veines, la pression P2 correspondant à une pression d'air dans la veine secondaire. En outre, ledit dispositif comprend :
- un module d'obtention, configuré pour obtenir des ensembles de mesures préalablement acquis en des instants de mesure respectifs sur une turbomachine d'essai en fonctionnement correspondant au type prédéfini, chaque ensemble de mesures comportant une mesure P1, une mesure P2, une mesure M d'un nombre de Mach de la turbomachine d'essai, et une mesure PCN12R représentative d'un régime basse pression de la turbomachine d'essai,
- un module d'apprentissage supervisé, configuré pour apprendre de manière supervisée, à partir desdits ensembles de mesures obtenus, un modèle prédictif du rapport P1/P2 en fonction du nombre M et du régime PCN12R considérés comme variables explicatives.

Selon un sixième aspect, l'invention concerne un système de traitement pour la détermination d'un modèle prédictif d'un rapport de pressions P1/P2 pour une turbomachine double flux de type prédéfini comportant une veine primaire et une veine secondaire séparées par un compartiment inter-veines, la pression P1 correspondant à une pression d'air au sein dudit compartiment inter-veines, la pression P2 correspondant à une pression d'air dans la veine secondaire. En outre, ledit système comprend :
- des moyens d'acquisition configurés pour acquérir sur une turbomachine d'essai en fonctionnement correspondant au type prédéfini, en des instants de mesure respectifs, des ensembles de mesures comportant chacun une mesure P1, une mesure P2, une mesure M d'un nombre de Mach de la turbomachine d'essai, et une mesure PCN12R représentative d'un régime basse pression de la turbomachine d'essai,
- un dispositif de traitement pour la détermination d'un modèle prédictif selon l'invention.

Selon un septième aspect, l'invention concerne un dispositif de traitement pour la détermination d'au moins une table de rapports de pressions P1/P2 destinée à la commande d'une vanne de contrôle de jeux d'aubes d'une turbine basse pression équipant une turbomachine double flux, ladite turbomachine comportant une veine primaire et une veine secondaire séparées par un compartiment inter-veines, la pression P1 correspondant à une pression d'air au sein dudit compartiment inter-veines, la pression P2 correspondant à une pression d'air dans la veine secondaire. En outre, ledit dispositif de traitement comporte :
- un module d'obtention, configuré pour obtenir un modèle prédictif d'un rapport de pressions P1/P2 préalablement déterminé pour ladite turbomachine selon l'invention,
- un module de génération, configuré pour générer au moins une grille bidimensionnelle vide de taille prédéterminée dont une dimension correspond à des valeurs de nombre de Mach M de la turbomachine, et dont l'autre dimension correspond à des valeurs PCN12R représentatives d'un régime basse pression de la turbomachine,
- un module de remplissage, configuré pour remplir la grille, chaque noeud de la grille étant associé à un rapport de pressions P1/P2 déterminé par application dudit modèle prédictif au nombre de Mach M et à la valeur PCN12R associés audit noeud, la grille ainsi remplie formant une table de rapports de pression P1/P2.

Selon un huitième aspect, l'invention concerne un procédé de commande d'une vanne de contrôle de jeux d'aubes d'une turbine basse pression équipant une turbomachine double flux, ledit procédé étant mis en oeuvre par une unité de calcul comportant une table déterminée selon l'invention.

Selon un neuvième aspect, l'invention concerne une unité de calcul pour la commande d'une vanne de contrôle de jeux d'aubes d'une turbine basse pression équipant une turbomachine double flux, ladite unité de calcul comportant une table déterminée selon l'invention.

Selon un dixième aspect, l'invention concerne un aéronef comportant :
- une turbomachine double flux,
- une vanne de contrôle de jeux d'aubes d'une turbine basse pression équipant ladite turbomachine,
- une unité de calcul selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement un exemple de réalisation d'une turbomachine double flux destinée à équiper un aéronef, telle que connue dans l'état de la technique ;
[Fig. 2] la figure 2 représente schématiquement l'architecture de l'environnement d'une vanne de contrôle de type LTPACC et de sa commande active, telle que connue dans l'état de la technique ;
[Fig. 3] la figure 3 représente schématiquement un exemple de réalisation, selon l'invention, d'un système de traitement configuré pour déterminer un modèle prédictif d'un rapport de pressions P1/P2 pour une turbomachine double flux d'un type prédéfini ;
[Fig. 4] la figure 4 représente un organigramme d'un mode de mise en oeuvre, selon l'invention, d'un procédé détermination d'un modèle prédictif ;
[Fig. 5] la figure 5 représente schématiquement un mode préféré de mise en oeuvre du procédé de la figure 4 ;
[Fig. 6] la figure 6 représente un organigramme d'un mode de mise en oeuvre, selon l'invention, d'un procédé de détermination d'au moins une table de rapports de pressions P1/P2 ;
[Fig. 7] la figure 7 représente schématiquement un exemple de table de rapports de pression P1/P2 ;
[Fig. 8] la figure 8 représente schématiquement un mode préféré de mise en oeuvre du procédé de la figure 6.

### Description des modes de réalisation

La présente invention trouve sa place dans le domaine de la commande d'une vanne de type LPTACC équipant une turbomachine double flux.

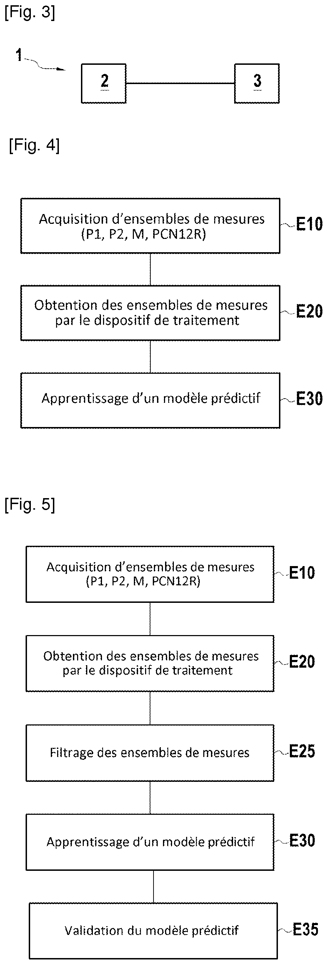

La figure 3 représente schématiquement un exemple de réalisation, selon l'invention, d'un système 1 de traitement configuré pour déterminer un modèle prédictif d'un rapport de pressions P1/P2 pour une turbomachine double flux d'un type prédéfini.

Par « turbomachine double flux de type prédéfini », on fait référence ici à une turbomachine double flux développée suivant un cahier des charges techniques prédéterminé, par exemple un cahier des charges techniques conçu par un motoriste, dans l'objectif d'une production en série pour équiper des aéronefs.

Pour la suite de la description, on considère que la turbomachine à laquelle il est fait référence pour l'invention admet une configuration générale conforme à l'état de l'art. A titre d'exemple nullement limitatif, une telle configuration générale a été décrite ci-avant en référence à la figure 1, dont les numéros sont désormais ici repris. A tout le moins, on rappelle ici succinctement que la turbomachine double flux 100 comporte une veine primaire VP et une veine secondaire VS séparées par un compartiment inter-veines 110, la pression P1 correspondant à une pression d'air au sein dudit compartiment inter-veines 110. On note que la pression P1 est là même en tout point du compartiment inter-veines 110.

La pression P2, quant à elle, correspond à une pression d'air dans la veine secondaire VS.

En outre, la suite de la description vise plus spécifiquement des aéronefs de type avions civils aptes à transporter des passagers. Toutefois, aucune limitation n'est attachée au type d'aéronef susceptible d'être considéré pour l'invention, dès lors que la propulsion de cet aéronef est mise en oeuvre par au moins une turbomachine double flux 100.

Le système 1 de traitement comporte des moyens d'acquisition 2 configurés pour acquérir des ensembles de mesures sur une turbomachine 100 d'essai correspondant au type prédéfini.

Par « turbomachine d'essai », on fait référence ici, préférentiellement, à une turbomachine 100 montée sur banc d'essai, et conforme au type destiné à être produit en série. Rien n'exclut cependant de considérer d'autres configurations d'essai pour la turbomachine double flux 100, comme par exemple une turbomachine équipant un aéronef utilisé à des fins d'essais pour l'invention.

Il convient de noter que le fait d'acquérir les ensembles de mesures sur une turbomachine d'essai permet de constituer une banque de données ensuite utilisée pour déterminer ledit modèle prédictif, comme cela est détaillé ultérieurement.

Lesdits ensembles de mesures sont acquis en des instants de mesures respectifs, et comportent chacun une mesure P1, une mesure P2, une mesure M d'un nombre de Mach de la turbomachine 100 d'essai, et une mesure PCN12R représentative d'un régime basse pression de la turbomachine 100 d'essai. On comprend donc que chaque ensemble de mesures correspond à un quadruplet du type (P1, P2, M, PCN12R).

De manière conventionnelle, les moyens d'acquisition 2 comportent au moins un capteur dédié à la mesure de chaque quantité P1, P2, M, PCN12R. De tels capteurs sont intégrés au moteur, et sont de types connus en soi. Par exemple, pour obtenir des mesures de pression P2, des capteurs équipés de peignes montés suivant différentes positions radiales sont positionnés dans la veine secondaire VS en aval des redresseurs OGV 109. Pour obtenir des mesures de pression P1, des capteurs peuvent être positionnés indifféremment dans le compartiment inter-veines 110. Des mesures de nombre de Mach et de régime PCN12R sont par exemple obtenus respectivement au moyen d'un tube de Pitot et d'un tachymètre magnétique.

D'une manière générale, l'homme du métier sait comment réaliser l'acquisition desdits ensembles de mesures, et saura donc choisir des capteurs adéquats pour chacune des quantités considérées, par exemple dans les catalogues des produits offerts par les fabricants spécialisés. Il saura en outre positionner ces capteurs.

Le système 1 de traitement comporte également un dispositif 3 de traitement configuré, notamment, pour obtenir les ensembles de mesures qui ont été acquis. A cet effet, le dispositif 3 de traitement comporte un module d'obtention (non représenté sur les figures), équipé par exemple de moyens de communication pour la réception desdits ensembles, après que ces derniers soient émis par les moyens d'acquisition 2, eux-mêmes pourvus dans ce cas de moyens de communication aptes à l'émission. Ces moyens de communication s'appuient, de manière connue en soi, sur une interface de communication apte à l'échange de données entre les moyens d'acquisition 2 et ledit dispositif 3. Aucune limitation n'est attachée à la nature de cette interface de communication, qui peut être filaire ou non filaire, de sorte à permettre l'échange de données selon tout protocole connu de l'homme de l'art (Ethernet, Wifi, Bluetooth, 3G, 4G, 5G, etc.).

Rien n'exclut non plus que le dispositif 3 de traitement obtienne, via son module d'obtention, les ensembles de mesures après que ces derniers aient été acquis et stockés dans des moyens de mémorisation externes au dispositif 3 de traitement, comme par exemple une base de données dédiée.

D'une manière générale, aucune limitation n'est attachée à la manière dont sont obtenus les ensembles de mesures par le dispositif 3 de traitement.

Le dispositif 3 de traitement est également configuré pour effectuer, pour le type de turbomachine 100 considéré et sur la base des ensembles de mesures obtenus, des traitements visant à déterminer ledit modèle prédictif, en mettant en oeuvre une partie des étapes d'un procédé de détermination dudit modèle.

A cet effet, le dispositif 3 de traitement comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en oeuvre une partie des étapes du procédé de détermination du modèle prédictif.

Alternativement ou en complément, le dispositif 3 de traitement comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre une partie des étapes du procédé de détermination du modèle prédictif.

En d'autres termes, le dispositif 3 de traitement comporte un ensemble de moyens configurés de façon logicielle (programme d'ordinateur spécifique) et / ou matérielle (FPGA, PLD, ASIC, etc.) pour mettre en oeuvre une partie des étapes du procédé de détermination du modèle prédictif.

Il est à noter que, dans cet exemple de réalisation, le dispositif 3 de traitement est positionné à distance de la turbomachine d'essai 100. Toutefois, rien n'exclut de considérer un dispositif 3 de traitement équipant ladite turbomachine d'essai 100.

La figure 4 représente un organigramme d'un mode de mise en oeuvre, selon l'invention, du procédé de détermination du modèle prédictif.

Tel qu'illustré dans la figure 4, le procédé de détermination du modèle prédictif comporte tout d'abord une étape E10 d'acquisition d'ensembles de mesures sur la turbomachine d'essai 100.

Par exemple, ladite étape E10 d'acquisition est exécutée pendant une durée prédéterminée, les instants de mesures respectivement associés aux ensembles de mesures étant séparés entre eux d'un pas prédéterminé, de sorte à acquérir un volume suffisant d'ensembles de mesures, typiquement plusieurs milliers d'ensembles de mesures, par exemple 2000 ensembles de mesures. L'invention reste néanmoins applicable à un nombre quelconque d'ensemble de mesures, et on comprend bien entendu que la précision du modèle prédictif déterminé au cours du procédé est corrélée au nombre d'ensembles de mesures acquis.

Ladite durée prédéterminée correspond par exemple à la durée totale d'une session d'utilisation de la turbomachine d'essai 100.

Selon un autre exemple, l'acquisition des mesures est déclenchée pendant une ou plusieurs phases spécifiques de fonctionnement de la turbomachine d'essai 100, la durée prédéterminée étant dès lors ajustée en correspondance avec les durées respectives de ces phases spécifiques.

Une fois lesdits ensembles de mesures acquis, ledit procédé comporte une étape E20 d'obtention desdits ensembles de mesures par le dispositif 3 de traitement, via le module d'obtention de ce dernier.

Une fois les ensembles de mesures obtenus par le dispositif 3 de traitement, ledit procédé comporte une étape E30 d'apprentissage supervisé, par ledit dispositif 3 et à partir desdits ensembles de mesures, d'un modèle prédictif du rapport P1/P2 en fonction du nombre M et du régime PCN12R considérés comme variables explicatives.

Ainsi, le modèle prédictif déterminé correspond à une fonction F de sorte que P1/P2 = F(M, PCN12R). Dit encore autrement, déterminer F revient à effectuer une régression de la variable expliquée P1/P2 en fonction des variables explicatives M et PCN12R. Selon l'invention, cette fonction F est obtenue par apprentissage supervisé.

Le fait de mettre en oeuvre un apprentissage supervisé pour déterminer le modèle prédictif du rapport P1/P2 permet avantageusement d'éviter tout découpage des ensembles de mesures acquis par tranche de Mach M, comme cela est pratiqué dans l'état de la technique. En outre, cette mise en oeuvre permet d'améliorer grandement la précision du modèle prédictif obtenu.

Il convient de noter que l'évaluation de la différence de précision entre un modèle prédictif selon l'invention et les modèles prédictifs par tranche de Mach obtenus dans l'état de la technique peut être mise en oeuvre selon tout test statistique connu de l'homme de l'art. Par exemple, ce test statistique peut être un test exact de Fisher exécuté grâce au logiciel libre R, afin de comparer la variance résiduelle du modèle prédictif selon l'invention avec les modèles prédictifs de l'état de la technique.

Dans un mode préféré de mise en oeuvre, l'étape E30 d'apprentissage supervisé comporte la mise en oeuvre d'un algorithme de machine à vecteurs de support. Un tel algorithme est encore connu sous la dénomination "SVM" (acronyme de l'expression anglo-saxonne « Support Vector Machine »), et permet d'appliquer des méthodes de régression linéaires à des variables expliquées dont l'évolution est a priori non linéaire, ce qui est le cas de la variable expliquée P1/P2.

Par exemple, l'algorithme de machine à vecteurs de support utilise un noyau gaussien. L'utilisation d'un tel noyau permet notamment de limiter le coût de calcul de l'étape d'apprentissage supervisé, et s'appuie à cet effet sur une technique dite d'astuce du noyau" (« kernel trick » dans la littérature anglo-saxonne). Cette manière de procéder étant connue de l'homme de l'art, elle n'est pas traitée plus en détails ici.

Il convient toutefois de noter que le choix d'un noyau gaussien ne constitue qu'une variante d'implémentation de l'invention. D'autres noyaux sont en effet envisageables, comme par exemple un noyau polynomial.

Le fait d'utiliser un algorithme de machine à vecteurs de support, notamment lorsque ce dernier utilise un noyau gaussien, permet d'obtenir d'excellents résultats de précision pour le modèle de prédiction, en comparaison avec les modèles prédictifs de l'état de la technique.

Il convient toutefois de noter qu'aucune limitation n'est attachée à la mise en oeuvre de l'étape E30 d'apprentissage supervisé. Ainsi, d'autres algorithmes peuvent être envisagés, comme par exemple un algorithme de forêts d'arbres décisionnels (« random forest classifier » dans la littérature anglo-saxonne).

En outre, et de manière parfaitement claire pour l'homme de l'art, on comprend que la précision du modèle prédictif obtenu par apprentissage supervisé dépend notamment du nombre d'ensemble de mesures considérés. Aucune limitation n'est en soi attachée à ce nombre, puisque l'apprentissage supervisé supprime en soi le biais désavantageux de l'état de la technique (un modèle prédictif pour chaque tranche de Mach M).

La figure 5 représente schématiquement un mode préféré de mise en oeuvre du procédé de la figure 4.

Tel qu'illustré dans la figure 5, le procédé de détermination du modèle prédictif comporte, avant l'étape E30 d'apprentissage supervisé, une étape E25 de filtrage des ensembles de mesures obtenus, de sorte à supprimer des ensembles comportant chacun au moins une mesure située en dehors d'un intervalle prédéfini associé à ladite mesure.

Selon ce mode préféré, l'étape E25 de filtrage est mise en oeuvre par le dispositif 3 de traitement, et permet avantageusement d'écarter des ensembles de mesures contenant des mesures aberrantes. Ainsi, les ensembles utilisés lors de l'étape E30 d'apprentissage supervisé sont filtrés, et la précision du modèle prédictif obtenu est encore accrue.

A titre d'exemple purement illustratif, une mesure aberrante peut correspondre à une vitesse de Mach M nulle alors même que la turbomachine d'essai 100 est en fonctionnement suivant des conditions visant à reproduire une phase de croisière. Selon cet exemple, l'ensemble comporte une telle mesure M n'est donc pas retenu.

On note d'ailleurs que l'étape E25 de filtrage peut comporter, avant le filtrage à proprement parler suivant lesdits intervalles, un tri des ensembles de mesures en fonction des phases spécifiques au cours desquelles lesdits ensembles ont été acquis. De cette manière, les intervalles utilisés lors du filtrage peuvent être différenciés en fonction de la phase spécifique considérée. Il en résulte un filtrage plus pertinent des ensembles de mesures.

Par ailleurs, et tel qu'illustré dans la figure 5, le procédé comporte également, dans ce mode préféré de mise en oeuvre, une étape E35 de validation du modèle prédictif appris, de sorte que si ledit modèle n'est pas validé, au moins l'étape E30 d'apprentissage supervisé est réitérée.

Procéder de cette manière permet d'accroitre la robustesse du procédé de détermination du modèle prédictif. Il s'agit donc de vérifier que ce modèle prédictif dispose d'un comportement conforme à un comportement attendu pour prévoir le rapport P1/P2 en fonction des variables M et PCN12R.

Il est à noter que si le modèle prédictif n'est pas validé, l'étape E30 d'apprentissage supervisé est par exemple à nouveau mise en oeuvre à partir des ensembles de mesures déjà acquis auparavant, préférentiellement en modifiant certains paramètres propres à l'exécution de la méthode d'apprentissage retenue.

Alternativement, si le modèle prédictif n'est pas validé, toutes les étapes du procédé de détermination sont à nouveau exécutées. Autrement dit, une nouvelle campagne d'essais est réalisée, de sorte à obtenir de nouveaux ensembles de mesures à partir desquels un modèle prédictif est appris.

Préférentiellement, l'étape E35 de validation comporte une validation croisée de type « k-fold ». Une telle validation croisée consiste tout d'abord à diviser les ensembles de mesures acquis en k échantillons. Le modèle prédictif appris est ensuite entrainé sur k-1 échantillons (donc k-1 ensembles de mesures), pour finalement être validé sur le k-ième échantillon restant. On obtient ainsi un score, dit "score de performance", par exemple représentatif de l'erreur quadratique du modèle prédictif appris. Ce processus est répété en faisant varier le k-ième échantillon de validation, de sorte à obtenir au final k scores de performance. Le calcul d'une moyenne de ces k scores de performance fournit un indicateur de la validité du modèle prédictif obtenu lors de l'étape E30 d'apprentissage supervisé.

Le choix d'une validation croisée de type "k-fold" ne constitue qu'une variante d'implémentation de l'invention. Toute méthode de validation connue de l'homme du métier peut être envisagée, comme par exemple une méthode de validation croisée de type « holdout method », ou bien encore une méthode de validation croisée de type LOOCV (acronyme de l'expression anglo-saxonne « leave-one-out cross-validation »).

Bien que les étapes E25 de filtrage et E35 de validation ont été décrites, en référence à la figure 5, comme étant toutes les deux exécutées au sein d'un même mode de mise en oeuvre, il convient toutefois de noter que la seule exécution d'une de ces deux étapes E25, E35 peut être envisagée pour l'invention.

L'invention a été décrite jusqu'à présent dans le cadre d'une détermination d'un modèle prédictif du rapport P1/P2 pour une turbomachine double flux 100. Lorsqu'un tel modèle prédictif a été déterminé, il peut être utilisé, selon un autre aspect de l'invention, par le dispositif 3 pour effectuer des traitements visant à déterminer au moins une table de rapports de pression P1/P2 destinée à être implémentée dans une unité de calcul d'un aéronef, en mettant en oeuvre un procédé de détermination de ladite moins une table.

Comme cela a été détaillé auparavant, ladite au moins une table est destinée à la commande d'une vanne de contrôle de jeux d'aubes d'une turbine basse pression 106 équipant la turbomachine double flux 100, plus particulièrement une vanne de type LPTACC.

Il convient de noter que ledit procédé de détermination d'au moins une table est mis en oeuvre ici par le dispositif 3 de traitement ayant déjà procédé à la détermination du modèle prédictif. Toutefois, rien n'exclut que ces deux procédés soient mis en oeuvre par des dispositifs de traitement séparés. Dans ce cas, le dispositif de traitement utilisé pour la détermination d'au moins une table admet une configuration logicielle et / ou matérielle identique à celle du dispositif 3 de traitement utilisé pour déterminer le modèle prédictif.

Pour la suite de la description, on considère que la vanne de contrôle à laquelle il est fait référence pour l'invention admet une configuration générale conforme à l'état de l'art. A titre d'exemple nullement limitatif, une telle configuration générale a été décrite ci-avant en référence à la figure 2, dont les numéros sont désormais ici repris. A tout le moins, on rappelle ici succinctement que ladite vanne 200 est apte au contrôle de jeux d'aubes de la turbine basse pression 106 équipant la turbomachine double flux 100. Par ailleurs, un aéronef comportant ladite turbomachine 100 équipée de la vanne de contrôle 200 comprend également une unité de calcul 400 configurée pour la commande de ladite vanne de contrôle 200.

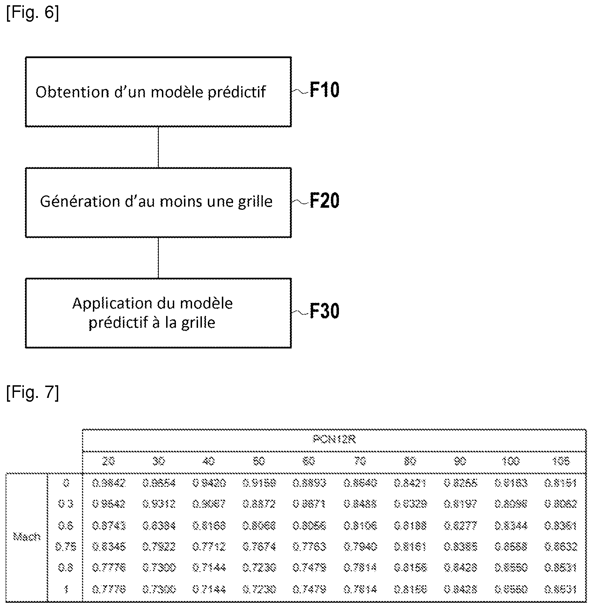

La figure 6 représente un organigramme d'un mode de mise en oeuvre, selon l'invention, du procédé de détermination d'au moins une table de rapports de pressions P1/P2.

Tel qu'illustré par la figure 6, le procédé de détermination d'au moins une table comporte tout d'abord une étape F10 d'obtention du modèle prédictif préalablement déterminé pour ladite turbomachine 100.

Par la suite, ledit procédé comporte une étape F20 de génération d'au moins une grille bidimensionnelle vide de taille prédéterminée dont une dimension correspond à des valeurs de nombre de Mach M de la turbomachine 100, et dont l'autre dimension correspond à des valeurs PCN12R.

De manière conventionnelle, chaque couple (M, PCN12R), formé d'une valeur de nombre de Mach M et d'une valeur PCN12R de la grille, peut être associé à un noeud de cette grille. Ce noeud correspond à un emplacement virtuelle de la grille positionné à l'intersection des valeurs M et PCN12R qui lui sont associées.

Il est à noter que le fait que la grille soit de taille prédéterminée résulte de contraintes de développement logiciel, ainsi que de capacité de mémorisation de l'unité de calcul 400. Par exemple, elle comporte en entrée six valeurs Mach M ainsi que dix valeurs PCN12R, de sorte à comporter soixante noeuds respectivement associés aux soixante couples pouvant être considérés à partir des valeurs fournies en entrée de la grille.

Rien n'exclut cependant de considérer d'autres tailles pour la grille, ainsi que d'autres valeurs de Mach M et de PCN12R en entrée. Il faut néanmoins tenir compte du fait qu'une telle grille est utilisée pour déterminer une table destinée à être implémentée dans l'unité de calcul 400 de l'aéronef. Par conséquent, elle doit préférentiellement comporter en entrée des valeurs de Mach M ainsi que des valeurs PCN12R représentatives de toutes les phases de vol suivant lesquelles l'aéronef va évoluer, encore plus particulièrement des phases de vol correspondant à des régimes moteur et à un nombre de Mach élevés (phase de montée et phases de croisière).

Une fois la grille générée, ledit procédé comporte une étape F30 de remplissage de la grille, chaque noeud de la grille étant associé à un rapport de pressions P1/P2 déterminé par application dudit modèle prédictif aux valeurs M et PCN12R associées audit noeud.

La grille ainsi remplie correspond à une table au sens de l'invention, à savoir donc une table de rapports de pression P1/P2 destinée à être implémentée dans l'unité de calcul 400 de la turbomachine double flux 100.

Le fait d'utiliser ici le modèle prédictif déterminé selon l'invention est particulièrement avantageux dans la mesure où la table bénéficie directement de la précision de calcul de ce dernier. En outre, cette précision se propage également aux valeurs déterminées par interpolation bilinéaire par l'unité de calcul 400 lorsqu'elle est munie de cette table.

La figure 7 représente schématiquement un exemple de table de rapports de pression P1/P2 destinée à la commande de la vanne de contrôle 200.

Tel qu'illustré par la figure 7, ladite table comporte en entrée (dimension verticale) six valeurs Mach M, à savoir : 0, 0,3, 0,6, 0,75, 0,8, 1. Elle comporte également en entrée (dimension horizontale) dix valeurs PCN12R, à savoir neuf valeurs comprises entre 20% et 100%, selon un pas de 10%, ainsi qu'une valeur égale à 105%. Ladite grille contient ainsi soixante noeuds, respectivement associés aux couples (M, PCN12R) fournis en entrée ainsi qu'à des valeurs P1/P2 correspondant à l'application du modèle prédictif à ces couples. Ces valeurs P1/P2 sont affichées dans la table. Par exemple, le noeud associé au couple (M, PCN12R) = (0,8 , 60) est également associé à la valeur P1/P2 = 0,7479.

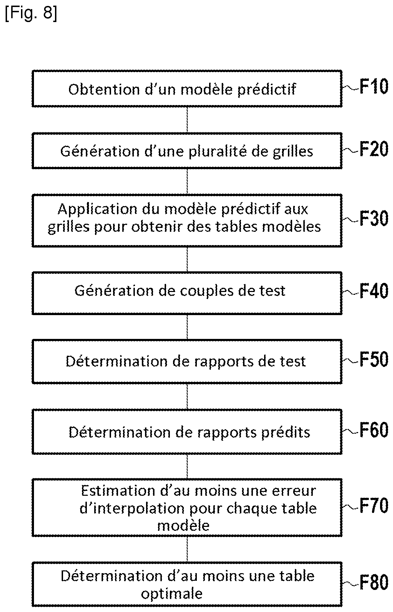

La figure 8 représente schématiquement un mode préféré de mise en oeuvre du procédé de la figure 6, dans lequel une pluralité de tables est générée afin de pouvoir identifier des tables aptes à décrire précisément le fonctionnement de la turbomachine 100 lors de conditions critiques (nombre de Mach M élevé et / ou régime PCN12R élevé).

Selon ce mode préféré de mise en oeuvre, et tel qu'illustré par la figure 8, une pluralité de grilles bidimensionnelles vides de tailles respectives identiques est générée au cours de l'étape F20. La génération de ces grilles s'effectue de manière aléatoire. Autrement dit, les couples d'entrée (M, PCN12R), pour la taille de grille considérée, sont tirés de manière aléatoire.

On obtient ainsi, au cours de l'étape F30, une pluralité de tables, dites « tables modèles », chaque table modèle étant déterminée par application du modèle prédictif à une des grilles générées.

Une fois lesdites tables modèles déterminées, le procédé comporte une étape F40 de génération de couples, dits « couples de test », chaque couple de test étant formé d'une valeur de nombre de Mach M ainsi que d'une valeur PCN12R.

Par exemple, la génération desdits couples de tests est réalisée de manière aléatoire. Alternativement, ladite génération est réalisée de manière déterministe à partir de pas prédéterminés pour respectivement les valeurs M et PCN12R, voire, encore plus particulièrement, dans des intervalles respectifs prédéterminés pour lesdites valeurs M et PCN12R.

A la suite de la génération des couples de tests, le procédé comporte une étape F50 de détermination, pour chaque table modèle et pour chaque couple de test, d'un rapport de pression P1/P2, dit « rapport de test », par interpolation bilinéaire entre des rapports de pression P1/P2 contenus dans ladite table modèle. De cette manière, à chaque couple de test correspond un rapport de pression P1/P2 pour une desdites tables modèles.

Ledit procédé comporte également une étape F60 de détermination de rapports de pression P1/P2, dit « rapports prédits », par application dudit modèle prédictif à chaque couple de test.

On dispose donc désormais de rapports prédits ainsi que de rapports de test respectivement associés aux tables modèles. Comme il correspond à chaque couple de test un rapport de test (dans une table modèle) et un rapport prédit, il est donc possible de comparer ces rapports entre eux.

A cet effet, ledit procédé comporte une étape F70 d'estimation, pour chaque table modèle, d'au moins une erreur d'interpolation fonction de différences entre les rapports prédits associés à ladite table modèle et les rapports de test, chaque différence étant évaluée pour un rapport prédit et un rapport de test associés à un même couple de test.

L'objectif de l'étape F70 est donc de comparer les rapports de test de chaque table modèle avec les rapports prédits, de sorte à pouvoir ensuite juger de la pertinence d'une table modèle à décrire plus particulièrement le fonctionnement de la turbomachine 100 lors de phases spécifiques de vol (notamment nombre de Mach M élevé et / ou régime PCN12R élevé). On comprend en effet que dans la mesure où les rapports prédits sont entièrement déterminés au moyen du modèle prédictif, ils forment des valeurs a priori plus précises que celles obtenues pour chaque table modèle au moyen d'une interpolation bilinéaire.

Par exemple, deux erreurs d'interpolation sont estimées pour chaque table modèle :
- une première erreur d'interpolation correspondant au maximum, en valeur absolue, des différences entre les rapports prédits et les rapports de test, pour les rapports de test dont les couples de test associés ont une valeur PCN12R comprise entre 91% et 95% ainsi qu'à une valeur de nombre de Mach M comprise entre 0,79 et 0,89 ;
- une deuxième erreur d'interpolation correspondant au maximum, en valeur absolue, des différences entre les rapports prédits et les rapports de test, pour les rapports de test dont les couples de test associés ont une valeur PCN12R inférieure à 91% ainsi qu'une valeur de nombre de Mach M inférieure à 0,79.

On comprend donc que dans cet exemple de mise en oeuvre, la première erreur d'interpolation d'une table modèle permet de quantifier la précision des rapports P1/P2 obtenus par interpolation bilinéaire pour des nombres de Mach M élevés ainsi que pour des régimes PCN12R élevés. La deuxième erreur d'interpolation permet quant à elle de quantifier la précision des rapports P1/P2 obtenus par interpolation bilinéaire dans le domaine restant de la table modèle.

Aucune limitation n'est attachée au nombre d'erreurs d'interpolation pouvant être envisagé pour chaque table modèle. L'invention permet ainsi de considérer tout intervalle de valeurs pour le nombre de Mach M et / ou tout intervalle de valeurs pour le régime PCN12R, de sorte à obtenir des erreurs d'interpolation pour différentes zones d'une table. L'homme de l'art saura définir les bornes de ces intervalles en fonction des phases de vol qu'ils considèrent comme étant d'intérêt.

Finalement, ledit procédé comporte une étape F80 de détermination éventuelle, parmi les tables modèles, d'au moins une table, dite « table optimale », l'erreur d'interpolation d'une table optimale étant inférieure, en valeur absolue, à une valeur seuil prédéfinie.

Par « détermination éventuelle », on fait référence ici au fait que si la valeur seuil associée à une erreur d'interpolation est trop faible, il existe un risque qu'aucune table modèle ne puisse être jugée comme optimale.

Par exemple, en reprenant l'exemple de mise en oeuvre précédent, la valeur seuil associée à ladite première erreur d'interpolation (valeur PCN12R comprise entre 91% et 95% et nombre de Mach M compris entre 0,79 et 0,89) est égale à 0,5 %. La valeur seuil associée à ladite deuxième erreur d'interpolation (valeur PCN12R inférieure à 91% et un nombre de Mach M inférieur à 0,79) est quant à elle égale à 1,5 %.

Le choix de telles valeurs seuils ne constitue qu'une variante d'implémentation de l'invention. D'autres valeurs seuils sont envisageables, par exemple des valeurs seuils respectivement supérieures à 0,5 % et 1,5 % dans le cas où on souhaite obtenir davantage de tables optimales (par exemple si aucune table optimale n'a pu être déterminée). A l'inverse, ces valeurs seuils peuvent être abaissées pour appliquer un critère d'optimalité plus strict, et ainsi limiter le nombre de tables optimales susceptibles d'être obtenues.

La mise en oeuvre du procédé décrite en référence à la figure 8 est donc particulièrement avantageuse en ce qu'elle offre la possibilité d'obtenir des tables optimales pouvant présenter des maillages qui diffèrent les uns des autres. Il en découle la possibilité d'obtenir des tables optimales présentant des maillages fins pour des phases de vol au cours desquels il est crucial d'évaluer avec précision la pressions P1 (nombre de mach M élevé et / ou régime PCN12R élevé), cela afin que l'unité de calcul 400 commande avec précision la vanne de contrôle 200.

On comprend par ailleurs que plus le nombre de grilles et le nombre de couples de test générés sont grands, plus il est possible d'obtenir des tables optimales présentant des maillages fins dans les domaines (nombre de Mach M, régime PCN12R) considérés comme étant d'intérêt.

Cela est encore renforcé lorsque le nombre de couples de test générés est supérieur au nombre de grilles générées aléatoirement.

A titre d'exemple nullement limitatif, le nombre de couples de test générés est dix fois supérieur au nombre de grilles bidimensionnelles générées aléatoirement. Par exemple, le nombre de couples de test est égal à 10^6, et le nombre de grilles est égal à 10^5.

Rien n'exclut cependant, suivant d'autres exemples non détaillés ici, d'avoir des nombres de couples de test et de grilles différents.

## Revendications

1. Procédé de détermination d'un modèle prédictif d'un rapport de pressions P1/P2 pour une turbomachine double flux (100) de type prédéfini comportant une veine primaire (VP) et une veine secondaire (VS) séparées par un compartiment inter-veines (110), la pression P1 correspondant à une pression d'air au sein dudit compartiment inter-veines (110), la pression P2 correspondant à une pression d'air dans la veine secondaire (VS),
ledit procédé étant mis en oeuvre par un système (1) de traitement comportant des moyens d'acquisition (2) ainsi qu'un dispositif (3) de traitement, et comprenant :
- une étape (E10) d'acquisition, par lesdits moyens d'acquisition (2) et sur une turbomachine d'essai en fonctionnement correspondant au type prédéfini, en des instants de mesure respectifs, d'ensembles de mesures comportant chacun une mesure P1, une mesure P2, une mesure M d'un nombre de Mach de la turbomachine d'essai, et une mesure PCN12R représentative d'un régime basse pression de la turbomachine d'essai,
- une étape (E20) d'obtention desdits ensembles de mesures par le dispositif (3) de traitement,
- une étape (E30) d'apprentissage supervisé, par le dispositif de traitement (3) et à partir desdits ensembles de mesures obtenus, d'un modèle prédictif du rapport P1/P2 en fonction du nombre M et du régime PCN12R considérés comme variables explicatives.

2. Procédé de détermination d'au moins une table de rapports de pressions P1/P2 destinée à la commande d'une vanne de contrôle (200) de jeux d'aubes d'une turbine basse pression (106) équipant une turbomachine double flux (100), ladite turbomachine (100) comportant une veine primaire (VP) et une veine secondaire (VS) séparées par un compartiment inter-veines (110), la pression P1 correspondant à une pression d'air au sein dudit compartiment inter-veines (110), la pression P2 correspondant à une pression d'air dans la veine secondaire (VS), ledit procédé comportant :
- une étape (F10) d'obtention d'un modèle prédictif d'un rapport de pressions P1/P2 préalablement déterminé pour ladite turbomachine (100) selon la revendication 1,
- une étape (F20) de génération d'au moins une grille bidimensionnelle vide de taille prédéterminée dont une dimension correspond à des valeurs de nombre de Mach M de la turbomachine (100), et dont l'autre dimension correspond à des valeurs PCN12R représentatives d'un régime basse pression de la turbomachine (100),
- une étape (F30) de remplissage de la grille, chaque noeud de la grille étant associé à un rapport de pressions P1/P2 déterminé par application dudit modèle prédictif aux valeurs M et PCN12R associées audit noeud, la grille ainsi remplie formant une table de rapports de pression P1/P2.

3. Procédé selon la revendication 2, dans lequel une pluralité de grilles bidimensionnelles vides de tailles respectives identiques est générée de manière aléatoire au cours de l'étape (F20) de génération d'au moins une grille, de sorte à obtenir une pluralité de tables de rapports de pression P1/P2, dites « tables modèles », correspondant respectivement auxdites grilles remplies au cours de l'étape (F30) de remplissage, ledit procédé comportant en outre :
- une étape (F40) de génération de couples, dits « couples de test », chaque couple de test étant formé d'une valeur de nombre de Mach M ainsi que d'une valeur PCN12R,
- une étape (F50) de détermination, pour chaque table modèle et pour chaque couple de test, d'un rapport de pression P1/P2, dit « rapport de test », par interpolation bilinéaire entre des rapports de pression P1/P2 contenus dans ladite table modèle,
- une étape (F60) de détermination de rapports de pression P1/P2, dit « rapports prédits », par application dudit modèle prédictif à chaque couple de test,
- une étape (F70) d'estimation, pour chaque table modèle, d'au moins une erreur d'interpolation fonction de différences entre les rapports prédits associés à ladite table modèle et les rapports de test, chaque différence étant évaluée pour un rapport prédit et un rapport de test associés à un même couple de test
- une étape (F80) de détermination éventuelle, parmi les tables modèles, d'au moins une table, dite « table optimale », l'erreur d'interpolation d'une table optimale étant inférieure, en valeur absolue, à une valeur seuil prédéfinie.

4. Procédé selon la revendication 3, dans lequel deux erreurs d'interpolation sont estimées pour chaque table modèle :
- une première erreur d'interpolation correspondant au maximum, en valeur absolue, des différences entre les rapports prédits et les rapports de test, pour les rapports de test dont les couples de test associés ont une valeur PCN12R comprise entre 91% et 95% ainsi qu'à une valeur de nombre de Mach M comprise entre 0,79 et 0,89, la valeur seuil associée à ladite première erreur d'interpolation étant égale à 0,5 % ;
- une deuxième erreur d'interpolation correspondant au maximum, en valeur absolue, des différences entre les rapports prédits et les rapports de test, pour les rapports de test dont les couples de test associés ont une valeur PCN12R inférieure à 91% ainsi qu'une valeur de nombre de Mach M inférieure à 0,79, la valeur seuil associée à ladite deuxième erreur d'interpolation étant égale à 1,5 %.

5. Programme d'ordinateur comportant un ensemble d'instructions de code de programme qui, lorsqu'elles sont exécutées par un processeur, configurent ledit processeur pour mettre en oeuvre :
- des étapes d'obtention et d'apprentissage supervisé d'un procédé de détermination d'un modèle prédictif selon la revendication 1, et / ou
- un procédé de détermination d'au moins une table selon l'une quelconque des revendications 2 à 4.

6. Support d'enregistrement lisible par un ordinateur sur lequel est enregistré un programme d'ordinateur selon la revendication 5.

7. Dispositif (3) de traitement pour la détermination d'au moins une table de rapports de pressions P1/P2 destinée à la commande d'une vanne de contrôle (200) de jeux d'aubes d'une turbine basse pression (103) équipant une turbomachine double flux (100), ladite turbomachine (100) comportant une veine primaire (VP) et une veine secondaire (VS) séparées par un compartiment inter-veines (110), la pression P1 correspondant à une pression d'air au sein dudit compartiment inter-veines (110), la pression P2 correspondant à une pression d'air dans la veine secondaire (VS) :
- un module d'obtention, configuré pour obtenir un modèle prédictif d'un rapport de pressions P1/P2 préalablement déterminé pour ladite turbomachine (100) selon la revendication 1,
- un module de génération, configuré pour générer au moins une grille bidimensionnelle vide de taille prédéterminée dont une dimension correspond à des valeurs de nombre de Mach M de la turbomachine (100), et dont l'autre dimension correspond à des valeurs PCN12R représentatives d'un régime basse pression de la turbomachine (100),
- un module de remplissage, configuré pour remplir la grille, chaque noeud de la grille étant associé à un rapport de pressions P1/P2 déterminé par application dudit modèle prédictif au nombre de Mach M et à la valeur PCN12R associés audit noeud, la grille ainsi remplie formant une table de rapports de pression P1/P2.

8. Procédé de commande d'une vanne de contrôle (200) de jeux d'aubes d'une turbine basse pression (106) équipant une turbomachine double flux (100), ledit procédé étant mis en oeuvre par une unité de calcul (400) comportant une table déterminée selon l'une quelconque des revendications 2 à 4.

9. Unité de calcul (400) pour la commande d'une vanne de contrôle (200) de jeux d'aubes d'une turbine basse pression (106) équipant une turbomachine double flux (100), ladite unité de calcul (400) comportant une table déterminée selon l'une quelconque des revendications 2 à 4.

10. Aéronef comportant :
- une turbomachine double flux (100),
- une vanne de contrôle (200) de jeux d'aubes d'une turbine basse pression (106) équipant ladite turbomachine (100),
- une unité de calcul (400) selon la revendication 9.

## Patentansprüche

1. Verfahren zur Bestimmung eines prädiktiven Modells eines Druckverhältnisses P1/P2 für ein Doppelstromturbinentriebwerk (100) vorbestimmten Typs, aufweisend einen primären Kanal (VP) und einen sekundären Kanal (VS), die durch einen Kanalzwischenraum (110) getrennt sind, wobei der Druck P1 einem Luftdruck im Kanalzwischenraum (110) entspricht, wobei der Druck P2 einem Luftdruck im sekundären Kanal (VS) entspricht,
wobei das Verfahren von einem Verarbeitungssystem (1) durchgeführt wird, das Erfassungsmittel (2) sowie eine Verarbeitungsvorrichtung (3) aufweist und umfasst:
- einen Schritt (E10) des Erfassens durch die Erfassungsmittel (2) und bei einem Test-Turbinentriebwerk im Betrieb, das dem vorbestimmten Typ entspricht, zu jeweiligen Messzeiten von Gruppen von Messungen, die jeweils eine Messung P1, eine Messung P2, eine Messung M einer Machzahl des Test-Turbinentriebwerks und eine Messung PCN12R aufweisen, die für ein Niederdruckregime des Test-Turbinentriebwerks repräsentativ ist,
- einen Schritt (E20) des Erhaltens der Gruppen von Messungen durch die Verarbeitungsvorrichtung (3),
- einen Schritt (E30) des überwachten Lernens durch die Verarbeitungsvorrichtung (3) und ausgehend von den erhaltenen Messgruppen eines prädiktiven Modells des Verhältnisses P1/P2 in Abhängigkeit von der berücksichtigten Zahl M und des berücksichtigten Regimes PCN12R als explikative Variablen.

2. Verfahren zur Bestimmung mindestens einer Verhältnistabelle der Drücke P1/P2, die zur Steuerung eines Steuerventils (200) von Schaufelspielen einer Niederdruckturbine (106) bestimmt ist, die ein Doppelstromturbinentriebwerk (100) ausstattet, wobei das Turbinentriebwerk (100) einen primären Kanal (VP) und einen sekundären Kanal (VS) aufweist, die durch einen Kanalzwischenraum (110) getrennt sind, wobei der Druck P1 einem Luftdruck im Kanalzwischenraum (110) entspricht, wobei der Druck P2 einem Luftdruck im sekundären Kanal (VS) entspricht, wobei das Verfahren aufweist:
- einen Schritt (F10) des Erhaltens eines prädiktiven Modells eines zuvor für das Turbinentriebwerk (100) nach Anspruch 1 bestimmten Druckverhältnisses P1/P2,
- einen Schritt (F20) des Erzeugens mindestens eines leeren zweidimensionalen Gitters vorbestimmter Größe, von dem eine Dimension Werten der Machzahl M des Turbinentriebwerks (100) entspricht und dessen andere Dimension PCN12R-Werten entspricht, die für ein Niederdruckregime des Turbinentriebwerks (100) repräsentativ sind,
- einen Schritt (F30) des Füllens des Gitters, wobei jeder Knoten des Gitters einem Druckverhältnis P1/P2 zugeordnet ist, das durch Anwendung des prädiktiven Modells auf die Werte M und PCN12R bestimmt wurde, die dem Knoten zugeordnet sind, wobei das derart gefüllte Gitter eine Druckverhältnistabelle P1/P2 bildet.

3. Verfahren nach Anspruch 2, wobei eine Vielzahl leerer zweidimensionaler Gitter jeweiliger identischer Größen während des Schritts (F20) des Erzeugens von mindestens einem Gitter zufallsbedingt erzeugt wird, so dass eine Vielzahl von Verhältnistabellen des Drucks P1/P2, bezeichnet als "Modelltabellen", erhalten wird, die jeweils den während des Schritts (F30) des Füllens gefüllten Gittern entsprechen, wobei das Verfahren ferner aufweist:
- einen Schritt (F40) des Erzeugens von Paaren, bezeichnet als "Testpaare", wobei jedes Testpaar von einem Wert der Machzahl M sowie einem PCN12R-Wert gebildet ist,
- einen Schritt (F50) des Bestimmens für jede Modelltabelle und für jedes Testpaar eines Druckverhältnisses P1/P2, bezeichnet als "Testverhältnis", durch bilineare Interpolation zwischen den in der Modelltabelle enthaltenen Druckverhältnissen P1/P2,
- einen Schritt (F60) des Bestimmens von Druckverhältnissen P1/P2, bezeichnet als "vorhergesagte Verhältnisse", durch Anwendung des prädiktiven Modells auf jedes Testpaar,
- einen Schritt (F70) des Schätzens für jede Modelltabelle mindestens eines Interpolationsfehlers in Abhängigkeit von Differenzen zwischen den vorhergesagten Verhältnissen, die der Modelltabelle zugeordnet sind, und den Testverhältnissen, wobei jede Differenz für ein vorhergesagtes Verhältnis und ein Testverhältnis evaluiert wird, die demselben Testpaar zugeordnet sind,
- einen Schritt (F80) des eventuellen Bestimmens aus den Modelltabellen mindestens einer als "optimale Tabelle" bezeichneten Tabelle, wobei der Interpolationsfehler einer optimalen Tabelle in absolutem Wert kleiner als ein vorher festgelegter Grenzwert ist.

4. Verfahren nach Anspruch 3, wobei zwei Interpolationsfehler für jede Modelltabelle geschätzt werden:
- ein erster Interpolationsfehler, der maximal in absolutem Wert Differenzen zwischen den vorhergesagten Verhältnissen und den Testverhältnissen für die Testverhältnisse entspricht, deren zugeordnete Testpaare einen PCN12R-Wert haben, der zwischen 91% und 95% liegt sowie einen Wert der Machzahl M, der zwischen 0,79 und 0,89 liegt, wobei der dem ersten Interpolationsfehler zugeordnete Grenzwert gleich 0,5% ist;
- ein zweiter Interpolationsfehler, der maximal in absolutem Wert Differenzen zwischen den vorhergesagten Verhältnissen und den Testverhältnissen für die Testverhältnisse entspricht, deren zugeordnete Testpaare einen PCN12R-Wert kleiner als 91% haben sowie einen Wert der Machzahl M kleiner als 0,79, wobei der dem zweiten Interpolationsfehler zugeordnete Grenzwert gleich 1,5% ist.

5. Rechnerprogramm, das eine Gruppe von Programmcodebefehlen aufweist, die, wenn sie von einem Prozessor ausgeführt werden, den Prozessor konfigurieren, um durchzuführen:
- Schritte des Erhaltens und des überwachten Lernens eines Verfahrens zur Bestimmung eines prädiktiven Modells nach Anspruch 1, und/oder
- ein Verfahren zur Bestimmung mindestens einer Tabelle nach einem der Ansprüche 2 bis 4.

6. Rechnerlesbares Speichermedium, auf dem ein Rechnerprogramm nach Anspruch 5 gespeichert ist.

7. Verarbeitungsvorrichtung (3) zur Bestimmung mindestens einer Druckverhältnistabelle P1/P2, die zur Steuerung eines Steuerventils (200) von Schaufelspielen einer Niederdruckturbine (103) bestimmt ist, die ein Doppelstromturbinentriebwerk (100) ausstattet, wobei das Turbinentriebwerk (100) einen primären Kanal (VP) und einen sekundären Kanal (VS) aufweist, die durch einen Kanalzwischenraum (110) getrennt sind, wobei der Druck P1 einem Luftdruck im Kanalzwischenraum (110) entspricht, wobei der Druck P2 einem Luftdruck im sekundären Kanal (VS) entspricht:
- ein Erhaltensmodul, das ausgelegt ist, um ein prädiktives Modell eines Druckverhältnisses P1/P2 zu erhalten, das zuvor für das Turbinentriebwerk (100) nach Anspruch 1 bestimmt wurde,
- ein Erzeugungsmodul, das ausgelegt ist, um mindestens ein leeres zweidimensionales Gitter vorbestimmter Größe zu erzeugen, von dem eine Dimension Werten der Machzahl M des Turbinentriebwerks (100) entspricht und dessen andere Dimension PCN12R-Werten entspricht, die für ein Niederdruckregime des Turbinentriebwerks (100) repräsentativ sind,
- ein Füllmodul, das ausgelegt ist, um das Gitter zu füllen, wobei jeder Knoten des Gitters einem Druckverhältnis P1/P2 zugeordnet ist, das durch Anwendung des prädiktiven Modells auf die Machzahl M und PCN12R-Wert bestimmt wurde, die dem Knoten zugeordnet sind, wobei das derart gefüllte Gitter eine Druckverhältnistabelle P1/P2 bildet.

8. Verfahren zum Steuern eines Steuerventils (200) von Schaufelspielen einer Niederdruckturbine (106), die ein Doppelstromturbinentriebwerk (100) ausstattet, wobei das Verfahren von einer Recheneinheit (400) durchgeführt wird, die eine nach einem der Ansprüche 2 bis 4 bestimmte Tabelle aufweist.

9. Recheneinheit (400) zum Steuern eines Steuerventils (200) von Schaufelspielen einer Niederdruckturbine (106), die ein Doppelstromturbinentriebwerk (100) ausstattet, wobei die Recheneinheit (400) eine nach einem der Ansprüche 2 bis 4 bestimmte Tabelle aufweist.

10. Fluggerät, das aufweist:
- ein Doppelstromturbinentriebwerk (100),
- ein Steuerventil (200) des Schaufelspiels einer Niederdruckturbine (106), die das Turbinentriebwerk (100) ausstattet,
- eine Recheneinheit (400) nach Anspruch 9.

## Claims

1. A method for determining a predictive model of a pressure ratio P1/P2 for a bypass turbomachine (100) of previously defined type including a primary air path (VP) and a secondary air path (VS) separated by an inter-path compartment (110), the P1 pressure corresponding to an air pressure inside said inter-path compartment (110), the P2 pressure corresponding to an air pressure in the secondary air path (VS),
said method being implemented by a processing system (1) including acquiring means (2) as well as a processing device (3), and comprising:
- a step (E10) of acquiring, by said acquiring means (2) and on a test turbomachine in operation corresponding to the previously defined type, at respective measurement times, sets of measurements each including a P1 measurement, a P2 measurement, a measurement M of a Mach number of the test turbomachine, and a PCN12R measurement representing a low pressure rating of the test turbomachine,
- a step (E20) of obtaining said sets of measurements by the processing device (3),
- a step (E30) of supervised learning, by the processing device (3) and on the basis of said sets of measurements obtained, of a predictive model of the ratio P1/P2 as a function of the M number and of the PCN12R rating considered as explanatory variables.

2. A method for determining at least one table of pressure ratios P1/P2 intended to command a valve (200) for controlling sets of blades of a low pressure turbine (106) equipping a bypass turbomachine (100), said turbomachine (100) including a primary air path (VP) and a secondary air path (VS) separated by an inter-path compartment (110), the P1 pressure corresponding to an air pressure inside said inter-path compartment (110), the P2 pressure corresponding to an air pressure in the secondary air path (VS), said method including:
- a step (F10) of obtaining a predictive model of a pressure ratio P1/P2 previously determined for said turbomachine (100) as claimed in claim 1,
- a step (F20) of generating at least one empty two-dimensional grid of predetermined size, one dimension of which corresponds to values of Mach number M of the turbomachine (100), and the other dimension of which corresponds to PCN12R values representing a low pressure rating of the turbomachine (100),
- a step (F30) of filling in the grid, each node of the grid being associated with a pressure ratio P1/P2 determined by applying said predictive model to the M and PCN12R values associated with said node, the grid thus filled in forming a table of pressure ratios P1/P2.

3. The method as claimed in claim 2, wherein a plurality of empty two-dimensional grids of identical respective sizes is generated at random during the step (F20) of generating at least one grid, so as to obtain a plurality of tables of pressure ratios P1/P2, so-called "model tables", corresponding respectively to said grids filled in during the filling-in step (F30), said method further including:
- a step (F40) of generating pairs, so-called "test pairs", each test pair being formed by a value of Mach number M as well as a PCN12R value,
- a step (F50) of determining, for each model table and for each test pair, a P1/P2 pressure ratio, the so-called "test ratio", by bilinear interpolation between P1/P2 pressure ratios contained in said model table,
- a step (F60) of determining P1/P2 pressure ratios, so-called "predicted ratios", by applying said predictive model to each test pair,
- a step (F70) of estimating, for each model table, at least one interpolation error as a function of differences between the predicted ratios associated with said model table and the test ratios, each difference being evaluated for a predicted ratio and a test ratio associated with one and the same test pair,
- a step (F80) of determining, where applicable, from among the model tables, at least one table, the so-called "optimal table", the interpolation error of an optimal table being less, as an absolute value, than a predefined threshold value.

4. The method as claimed in claim 3, wherein two interpolation errors are estimated for each model table:
- a first interpolation error corresponding to the maximum, as an absolute value, of the differences between the predicted ratios and the test ratios, for test ratios for which the test pairs associated have a PCN12R value between 91% and 95% along with a value of Mach number M between 0.79 and 0.89, the threshold value associated with said first interpolation error being equal to 0.5%;
- a second interpolation error corresponding to the maximum, as an absolute value, of the differences between the predicted ratios and the test ratios, for the test ratios for which the associated test pairs have a PCN12R value less than 91% along with a value of Mach number M less than 0.79, the threshold value associated with said second interpolation error being equal to 1.5 %.

5. A computer program including a set of program code instructions which, when they are executed by a processor, configure said processor for implementing:
- steps of obtaining and supervised learning of a method for determining a predictive model as claimed in claim 1, and/or
- a method for determining at least one table as claimed in any of claims 2 to 4.

6. A recording medium readable by a computer on which is recorded a computer program as claimed in claim 5.

7. A processing device (3) for determining at least one table of pressure ratios P1/P2 intended to command a valve (200) for controlling sets of blades of a low pressure turbine (103) equipping a bypass turbomachine (100), said turbomachine (100) including a primary air path (VP) and a secondary air path (VS) separated by an inter-path compartment (110), the P1 pressure corresponding to an air pressure inside said inter-path compartment (110), the P2 pressure corresponding to an air pressure in the secondary air path (VS), said device including:
- an obtaining module, configured to obtain a predictive model of a pressure ratio P1/P2 previously determined for said turbomachine (100) as claimed in claim 1,
- a generating module, configured to generate at least one empty two-dimensional grid of predetermined size, one dimension of which corresponds to values of Mach number M of the turbomachine (100), and the other dimension of which corresponds to PCN12R values representing a low pressure rating of the turbomachine (100),
- a filling-in module, configured to fill in the grid, each node of the grid being associated with a pressure ratio P1/P2 determined by applying said predictive model to the Mach number M and to the PCN12R value associated with said node, the grid thus filled in forming a table of pressure ratios P1/P2.

8. A method for commanding a valve (200) for controlling sets of blades of a low pressure turbine (106) equipping a bypass turbomachine (100), said method being implemented by a computing unit (400) including a table determined as claimed in any of claims 2 to 4.

9. A computing unit (400) for commanding a valve (200) for controlling sets of blades of a low pressure turbine (106) equipping a bypass turbomachine (100), said computing unit (400) including a table as claimed in any of claims 2 to 4.

10. An aircraft including:
- a bypass turbomachine (100),
- a valve (200) for controlling sets of blades of a low pressure turbine (106) equipping said turbomachine (100),
- a computing unit (400) as claimed in claim 9.
